Europäisches Patentamt

European Patent Office

Office européen des brevets

(19)

(11) Veröffentlichungsnummer: **0 298 073 B1**

(12) **EUROPÄISCHE PATENTSCHRIFT**

(45) Veröffentlichungstag der Patentschrift:
**31.01.90**

(21) Anmeldenummer: **88890160.0**

(22) Anmeldetag: **22.06.88**

(51) Int. Cl.⁴: **B60D 1/00**

(54) Anhängevorrichtung für Zugfahrzeuge, insbesondere Traktoren.

(30) Priorität: **03.07.87 AT 1676/87**

(43) Veröffentlichungstag der Anmeldung:
**04.01.89 Patentblatt 89/1**

(45) Bekanntmachung des Hinweises auf die Patenterteilung:
**31.01.90 Patentblatt 90/5**

(84) Benannte Vertragsstaaten:
**CH DE ES FR GB IT LI**

(56) Entgegenhaltungen:
**EP-A- 0 137 520**
**DE-A- 3 122 116**
**DE-A- 3 441 897**
**FR-A- 2 577 854**

(73) Patentinhaber: **SCHARMÜLLER GESELLSCHAFT M.B.H.
& CO.KG, Hauptstrasse 25, A-4870 Vöcklamarkt(AT)**

(72) Erfinder: **Scharmüller, Josef, Hauptstrasse 25,
A-4870 Vöcklamarkt(AT)**

(74) Vertreter: **Hübscher, Heiner, Dipl.-Ing. et al,
Patentanwälte Dipl.-Ing. Gerhard Hübscher, Dipl.-Ing.
Helmut Hübscher Dipl.-Ing. Heiner Hübscher
Spittelwiese 7, A-4020 Linz(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anhängevorrichtung für Zugfahrzeuge, insbesondere Traktoren, mit einer in einander zugekehrten Führungsnuten zweier Vertikalschienen höhenverstellbar geführten Kupplungsplatte, die eine Anhängekupplung od.dgl. aufnimmt und durch Verrasten eines horizontalen Rastbolzens in Rastausnehmungen der Vertikalschienen verriegelbar ist, wobei der querverlaufende Rastbolzen an der fahrzeugzugekehrten Seite schwenkbar an der Kupplungsplatte lagert und einen zur fahrzeugabgekehrten Seite hin vorragenden Handgriff aufweist (siehe EP-A 0 137 520)..

Um die Kupplungshöhe eines Zugfahrzeuges auf die jeweiligen Anhänger oder anzukuppelnden Arbeitsmaschinen und Geräte abstimmen zu können, werden die Anhängekupplungen an einer höhenverstellbaren Kupplungsplatte einer am Fahrzeugrahmen angebauten Anhängevorrichtung montiert, welche Kupplungsplatte in verschiedenen Höhenlagen verriegelbar ist. Bisher dienen nun zur Verriegelung der Kupplungsplatten meist lose Steckbolzen, die in entsprechende Löcher der Vertikalschienen einzustecken sind, so daß sich eine recht mühsam zu betätigende, verschmutzungs- und störanfällige Verriegelung ergibt, die noch dazu mit Verletzungsgefahren verbunden ist. Darüber hinaus wurde auch schon ein Verriegelungsmechanismus vorgeschlagen, der über ein aufwendiges Hebelwerk die Rastbolzen in die zugehörigen Rastausnehmungen eindrückt, wodurch zwar die Handhabung erleichtert wird, aber eine recht platzraubende Konstruktion entsteht, die den Verstellbereich beeinträchtigt, die Zugänglichkeit zur Zapfwelle des zugfahrzeuges behindert und außerdem durch den zu großen Versatz des Kupplungspunktes die Anhängeverhältnisse ungünstig beeinflußt.

Gemäß der EP-A-0 137 520 gibt es auch schon Anhängevorrichtungen mit querverlaufenden, einen Handgriff zur Betätigung aufweisenden Rastbolzen, die um ihre eigene Achse verschwenkbar an der Kupplungsplatte gelagert sind und mit nockenartigen Verriegelungselementen in sich über beide Nutenflanken erstreckende Rastausnehmungen eingreifen. Diese Vorrichtungen sind daher auf enge Herstellungstoleranzen angewiesen und die bleiben verschmutzungsempfindlich und wartungsintensiv, wozu noch kommt, daß ein Lösen der Verriegelung ein zusätzliches Anheben und Halten der Kupplungsplatte verlangt, um Klemmungen beim Entriegeln zu verhindern. Außerdem ist keine Selbstverriegelung möglich und für ein Einrasten der Verriegelungsnocken ein exaktes Positionieren der Kupplungsplatte notwendig.

Aus der EP-A2-0 179 422 geht weiters eine Anhängevorrichtung hervor, deren Kupplungsplatte mit Führungsnuten leistenförmige Vertikalschienen umgreift und zur Verriegelung in Fahrtrichtung liegende, in Bohrungen der Schienen eingreifende Rastbolzen aufnimmt. Auch hier ist eine Selbstverriegelung praktisch unmöglich, da die axial verschiebbaren Rastbolzen beim Eindringen in die Bohrungen klemmen, was selbstverständlich auch das händische Betätigen der Verriegelung erschwert. Es sind enge Toleranzen einzuhalten, es ist auf große Sauberkeit zu achten und außerdem bringt der beträchtliche Bauraum einen unerwünschten Versatz des Kupplungspunktes mit sich. Abgesehen davon, werden durch die Bohrungen in den Vertikalschienen die die Zugkräfte aufnehmenden Konstruktionselemente geschwächt und der Betätigungsmechanismus für die Rastbolzen ist aufwendig und wartungsintensiv.

Der Erfindung liegt daher die Aufgabe zugrunde, diese Mängel zu beseitigen und eine Anhängevorrichtung der eingangs geschilderten Art zu schaffen, die sich durch ihren besonders einfachen und platzsparenden Aufbau auszeichnet, die sich leicht und sicher handhaben läßt und die nicht zuletzt störunanfällig und robust ist.

Die Erfindung löst diese Aufgabe dadurch, daß die dem Fahrzeug zugekehrten Flanken der Führungsnuten Rastausnehmungen aufweisen, die zur Führungsnut offen sind, und daß sich der Rastbolzen über an der Kupplungsplatte gelagerte Schwenkarme abstützt, die gegen die Kraft von Rastfedern um eine mit Abstand oberhalb der Rastbolzenachse liegende Querachse verschwenkbar sind.

Kraft von Rastfedern um eine mit Abstand oberhalb der Bolzenachse liegende Querachse verschwenkbar an der Kupplungsplatte gelagerte Schwenkarme abstützt. Wird daher der Handgriff aufwärts gedrückt, schwenkt der Rastbolzen aus den Rastausnehmungen und gibt die Kupplungsplatte frei, die nun mit dem Handgriff den Führungsnuten entlang angehoben oder abgesenkt werden kann. Ein Loslassen des Handgriffes in der gewünschten Höhenlage der Anhängekupplung führt zu einer selbsttätigen Verriegelung, da die Rastfedern ein Zurückschwenken der Schwenkarme und dadurch ein Einrasten des Rastbolzens in die nächsten Rastausnehmungen bedingen. Mit ein und demselben Handgriff ist es daher möglich, sowohl die Verriegelung der Kupplungsplatte zu bedienen als auch deren Höhenverstellung vorzunehmen, wobei es weder Losteile gibt noch ein Umgreifen oder ein anderes umständliches Hantieren nötig wäre. Darüber hinaus kommt es zu einer besonders aufwandsarmen, flachen Konstruktion, die einen äußerst geringen Abstand zwischen Kupplungspunkt und Zapfwelle bzw. Fahrzeugrahmen erlaubt, die eine Schwächung der die Zugkraft aufnehmenden Nutenflanken vermeidet, die eine unbeeinträchtigte Zugänglichkeit zur Zapfwelle bietet und auch keine Bauteile außerhalb der Vertikalschienen verlangt. Der einfache Rastbolzen und die an der Hinterseite der Kupplungsplatte angelenkten Schwenkarme ergeben eine gut überprüfbare und auch gut geschützte Verriegelungsmechanik, die verschmutzungsunempfindlich ist und auch keine Verletzungsgefahren mit sich bringt.

In der Zeichnung ist der Erfindungsgegenstand in einem Ausführungsbeispiel veranschaulicht, und zwar zeigen

2

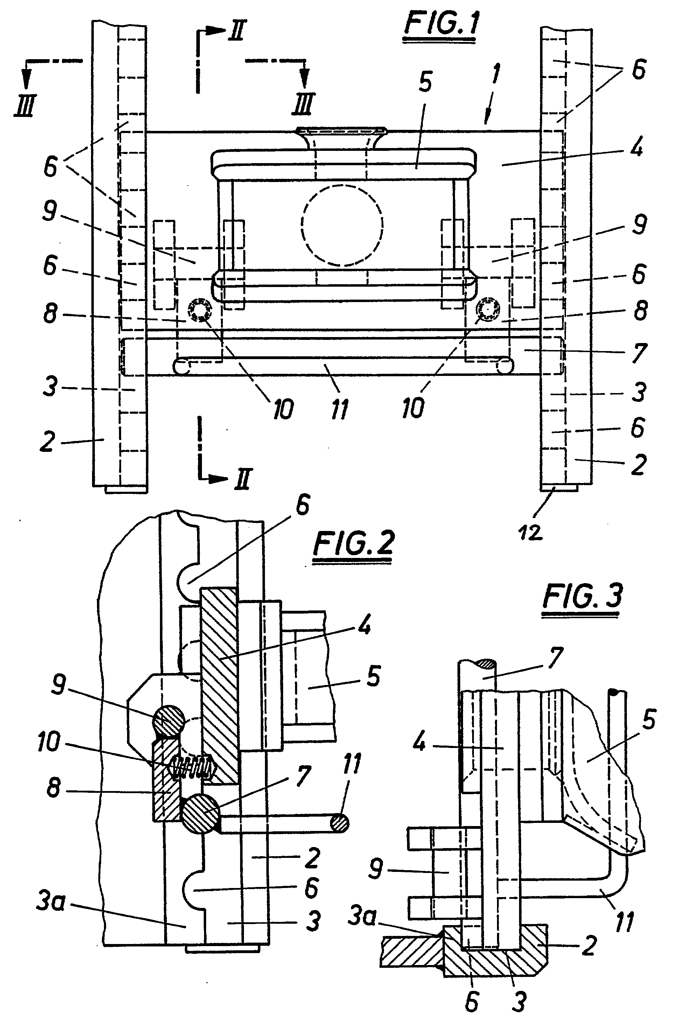

Fig. 1 eine erfindungsgemäße Anhängevorrichtung in Ansicht und die
Fig. 2 bzw.
Fig. 3 einen Vertikalschnitt bzw. Horizontalschnitt nach den Linien II-II bzw. III-III der Fig. 1.

Eine Anhängevorrichtung 1 zum höhenrichtigen Ankuppeln von Anhängern, Arbeitsmaschinen od.dgl. weist zwei in nicht weiter dargestellter Weise an einem Zugfahrzeug angebaute Vertikalschienen 2 auf, die einander zugekehrte Führungsnuten 3 bilden. In diesen Führungsnuten 3 sitzt eine höhenverstellbare Kupplungsplatte 4, die eine Anhängekupplung 5 aufnimmt. Zur Verriegelung der Kupplungsplatte 4 in den verschiedenen Höhenlagen, die durch Rastausnehmungen 6 der fahrzeugseitigen Führungsnutflanken 3a bestimmt sind, gibt es einen sich horizontal zwischen den beiden Vertikalschienen 2 erstreckenden und beiderends in die Führungsnuten 3 vorragenden Rastbolzen 7, der über Schwenkarme 8 um eine mit Abstand oberhalb der Bolzenachse liegende Querachse 9 verschwenkbar an der Hinterseite der Kupplungsplatte 4 lagert. Rastfedern 10 belasten die Schwenkarme 8 im Verriegelungssinn und drücken dadurch den Rastbolzen 7 in die jeweiligen Rstausnehmungen 6. Ein am Rastbolzen 7 befestigter, in Kupplungsrichtung über die Kupplungsplatte 4 vorragender bügelförmiger Handgriff 11 erlaubt eine einfache Betätigung, da durch ein Aufwärtsdrücken dieses Handhebels 11 der Rastbolzen 7 aus den Rastausnehmungen 6 in die Führungsnut 3 ausschwenkt und die Verriegelung löst. Nun läßt sich sofort mittels des Handgriffes 11 die Kupplungsplatte 4 und damit auch die Anhängekupplung 5 in ihrer Höhenlage verstellen, wobei der Rastbolzen 7 mit seinen Enden so wie die Kupplungsplatte 4 den Führungsnuten 3 entlanggleitet. Sobald der Handgriff 11 freigegeben wird, drücken die vorgespannten Rastfedern 10 die Schwenkarme 8 und damit den Rastbolzen 7 in die nächsten Rastausnehmungen 6 und führen selbständig wieder zu einer sicheren Verriegelung der Kupplungsplatte 4 mit den Vertikalschienen 2. Die Anhängekupplung 5 kann daher höhenrichtig auf den jeweiligen Anhänger od.dgl. abgestimmt werden, wobei die Zugkraft über die Anhängekupplung 5 und die Kupplungsplatte 4 auf die Vertikalschienen 2 übertragen wird, die sie mit ihren glatten, nicht durch die Rastausnehmungen 6 geschwächten Flanken der Führungsnuten 3 aufnehmen. Eine untere Verschlußplatte 12 für die Führungsnuten 3 verhindert ein ungewolltes Herausfallen der Kupplungsplatte 5 bei Bruch oder unvorsichtigem Hantieren, so daß es auch keinerlei Losteile bei dieser Anhängevorrichtung 1 gibt.

Die Anhängevorrichtung 1 zeichnet sich durch ihre einfache und robuste Konstruktion aus, die vor allem ein besonders nahes Heranrücken des Kupplungspunktes an den Fahrzeugrahmen bzw. an die Zapfwelle erlaubt. Darüber hinaus läßt sich die Anhängevorrichtung leicht und gefahrlos handhaben, sie ist störunanfällig und unempfindlich gegen Verschmutzung und sie kann außerdem gut überprüft werden.

**Patentansprüche**

Anhängevorrichtung (1) für Zugfahrzeuge, insbesondere Traktoren, mit einer in einander zugekehrten Führungsnuten (3) zweier Vertikalschienen (2) höhenverstellbar geführten Kupplungsplatte (4), die eine Anhängekupplung (5) od.dgl. aufnimmt und durch Verrasten eines horizontalen Rastbolzens (7) in Rastausnehmungen (6) der Vertikalschienen (2) verriegelbar ist, wobei der querverlaufende Rastbolzen (7) an der fahrzeugzugekehrten Seite schwenkbar an der Kupplungsplatte (4) lagert und einen zur fahrzeugabgekehrten Seite hin vorragenden Handgriff (11) aufweist, dadurch gekennzeichnet, daß die dem Fahrzeug zugekehrten Flanken (3a) der Führungsnuten (3) Rastausnehmungen (6) aufweisen, die zur Führungsnut offen sind, und daß sich der Rastbolzen (7) über an der Kupplungsplatte gelagerte Schwenkarme (8) absttzt, die gegen die Kraft von Rastfedern (10) um eine mit Abstand oberhalb der Rastbolzenachse liegende Querachse (9) verschwenkbar sind.

**Claims**

1. A towing hitch (1) for towing vehicles, particularly tractors, having a coupling plate (4) guided, with height adjustment, in guide grooves (3) facing one another in two vertical rails (2), which coupling plate accomodates a tow coupling (5) or similar and can be locked into stop recesses (6) of the vertical rails (2) by latching a horizontal stop bolt (7), wherein the transverse stop bolt (7) is pivotal on the coupling plate (4) on the side facing the vehicle and has a handle (11) projecting from the side facing away from the vehicle, characterised in that the sides (3a) of the guide grooves (3) facing the vehicle have stop recesses (6) which are open to the guide groove, and that the stop bolt (7) is supported on pivot arms (8) located on the coupling plate, which arms are pivotable against the force of stop springs (10) about a transverse axis (9) lying at a distance above the axis of the stop bolt.

**Revendications**

1. Attelage (1) pour véhicules de traction, en particulier tracteurs, comprenant une plaque d'accouplement (4) guidée par des rainures de guidage (3) se faisant face de deux rails verticaux (2) pour être mobile en hauteur, ladite plaque d'accouplement recevant un attelage (5) de remorquage ou autre et pouvant être verrouillée en encliquetant un boulon d'arrêt (7) horizontal dans des creux d'arrêt (6) des rails verticaux (2), le boulon d'arrêt (7) transversal reposant de façon à pouvoir pivoter contre la plaque d'accouplement sur le côté faisant face au véhicule et comprenant une poignée (11) faisant saillie du côté éloigné du véhicule, caractérisé en ce que les côtés (3a) des rainures de guidage (3) faisant face au véhicule sont pourvus de creux de verrouillage (6) ouverts en direction de la rainure de guidage et que le boulon d'arrêt (7) repose contre des bras pivotables (8) logés contre la plaque d'accouplement et pouvant être basculés contre la force de ressorts de verrouillage (10) autour d'un axe transversal (9) se trouvant au-dessus et éloigné de l'axe du boulon d'arrêt.

FIG.1

FIG.2

FIG.3